# DEMANDE DE BREVET EUROPEEN

(11) **EP 1 033 653 A1**
(43) Date de publication de la demande: **06.09.2000**
(21) Numéro de dépôt: 00400383.6
(22) Date de dépôt: 10.02.2000
(51) Int. Cl.: G06F 9/46

(54) **Procédé pour avertir un object de l'inaccessibilité d'autres objects dans un environnement d'objets distribués**

(30) Priorité: 04.03.1999 FR 9902683
(71) Demandeur: ALCATEL, 75008 Paris (FR)
(72) Inventeur: Pietre, Armel, 75015 Paris (FR); Banctel, Fabrice, 91190 Gif-sur-Yvette (FR); Feray, Alexandre, 75013 Paris (FR)
(74) Mandataire: Lamoureux, Bernard

(57) **Abrégé**

Un procédé pour avertir un objet ObjC₁ d'un processus client ProC₁ de l'inaccessibilité d'objets serveurs d'autres processus, utilise les premiers éléments représentants Proxy(A) des paires d'éléments représentants pour communiquer avec ces objets serveurs par un protocole objet-objet, pour dérouter vers un gestionnaire centralisé client LC₁ des demandes d'avertissement *advise*(*pObjC*_{*1*},...) envoyées par l'objet client ObjC₁ et concernant ces objets serveurs. Pour chaque processus serveur, le gestionnaire centralisé client LC₁ surveille un gestionnaire centralisé serveur LS₁ correspondant, pour émettre une notification d'inaccessibilité vers l'objet client, lorsque le gestionnaire centralisé client détecte un défaut de réponse d'un gestionnaire centralisé serveur.

## Description

La présente invention concerne un procédé pour avertir un objet de l'inaccessibilité d'autres objets dans un environnement d'objets distribués, basé sur un gestionnaire d'objets distribués. Un tel gestionnaire est habituellement désigné par l'acronyme anglo-saxon ORB (*Object Request Broker*).

On peut citer comme ORB particulièrement connus et utilisés, CORBA acronyme anglais pour Common Object *Request Broker Architecture* et DCOM pour *Distributed* Component *Object Model.*

Nombre d'applications utilisent un tel gestionnaire. On peut citer à titre d'exemple les applications de supervision en télécommunication ou transport, les applications constituant un réseau intelligent...

Dans un environnement d'objets distribués, une application peut utiliser différents serveurs, pour fournir des services à des clients.

On appelle processus client, un programme qui utilise des services, et processus serveur, un programme qui offre des services à des clients.

Un objet du processus client (une instance d'exécution d'un programme) peut solliciter un service du serveur en lui envoyant un message correspondant. Un objet correspondant du serveur exécute le service et renvoie le cas échéant un résultat au demandeur.

La communication entre ces deux objets distants se fait en pratique selon un protocole objet-objet.

Selon ce protocole, lorsqu'un objet d'un processus client envoie un message vers un objet d'un processus serveur pour un service donné, une paire d'éléments représentants de l'objet serveur est créée qui va gérer les appels inter processus correspondants, de manière transparente pour les deux objets distants que sont l'objet client et l'objet serveur. Plus précisément, un élément représentant Proxy de l'objet serveur est créé dans le processus client et un élément représentant correspondant Stub est créé dans le processus serveur. Tous les messages de l'objet du processus client à destination de l'objet du processus serveur et les réponses éventuelles (résultats) à ces messages, passent par cette interface Proxy/Stub du protocole objet-objet. Ce protocole objet-objet s'applique aussi bien à l'envoi de messages d'un objet serveur vers un objet client : on a alors un élément représentant Proxy de l'objet client dans le processus serveur et un élément représentant correspondant Stub dans le processus client.

Un avantage d'un tel protocole objet-objet est que les objets n'ont pas à savoir où se localisent les objets avec lesquels ils échangent des messages. Avec ce protocole, l'ORB cache en quelque sorte la localisation des objets, ce qui simplifie considérablement les accès aux objets où qu'ils se trouvent. On ne détaillera pas plus avant ces paires d'éléments représentants bien connues de l'homme du métier. On notera que les termes Proxy/Stub sont ceux de la terminologie DCOM, auxquels correspondent les termes Stub/Skeleton dans la terminologie CORBA. Dans la suite, on garde la terminologie DCOM, mais l'homme du métier saura étendre tout ce qui suit à tout ORB connu.

Dans certaines applications industrielles, notamment dans les domaines de la télécommunication et du transport, il est important de détecter rapidement l'inaccessibilité de certains objets distants. Par exemple, en supervision, il y a des services de détection de fautes avec génération d'alarmes correspondantes, sous forme de notifications vers les clients abonnés. Un client abonné qui ne reçoit plus d'alarmes doit pouvoir être averti que cela correspond en fait à la disparition du service correspondant. En effet, le client ne sait pas à l'avance si il va recevoir des notifications ni quand. Il doit donc pouvoir être certain de l'état de l'objet serveur, à savoir s'il est accessible ou s'il est inaccessible.

On notera ici que l'inaccessibilité d'un processus peut avoir différentes origines et conséquences : par exemple, sans être exhaustif, ce peut-être une disparition temporaire, par exemple due à une coupure réseau ; ou la disparition définitive, volontaire ou due à un incident logiciel ou même matériel.

Un service de détection de cycle de vie connu ( *life cycle service, dans la littérature anglo-saxonne*) disponible dans l'environnement DCOM est basé sur le délai utilisé par cet ORB (DCOM) dans sa gestion de la communication selon le protocole objet - objet. Ce délai plus connu sous son terme anglo-saxon *time-out*, est un paramètre de l'ORB lui-même et n'est généralement pas configurable.

Selon ce service, c'est l'ORB qui détecte qu'un élément représentant Stub d'un objet client ne répond plus, selon une détection basée sur le time-out et qui libère automatiquement les ressources des processus serveurs concernées par la disparition de l'objet client correspondant.

Dans l'invention, On voudrait aussi pouvoir informer les objets clients de la disparition d'un objet serveur.

Un tel mécanisme d'information des objets clients est décrit dans le brevet européen 98400942.3 (EP 0 872 797) ayant pour titre "*Gestion de la mort accidentelle d'un objet lors d'une communication entre objets distribués dans un environnement COM*". Dans ce mécanisme, un objet supplémentaire spécialisé est utilisé dans un processus client pour créer un lien inverse par lequel le mécanisme décrit précédemment permet aussi d'avertir un objet client de l'inaccessibilité d'un objet serveur.

Cet état de la technique n'est cependant pas satisfaisant, puisqu'il reste basé sur le time-out de l'ORB. En effet, on a vu que le time-out dépend uniquement de l'ORB utilisé et n'est donc généralement pas configurable. Par exemple, avec un ORB comme DCOM, il vaut six minutes.

En outre, avec une telle solution, pour chaque objet client intéressé dans la détection du cycle de vie d'un objet distant, il faut un objet spécialisé supplémentaire ainsi qu'une paire d'éléments représentants Proxy/Stub correspondante et cela, pour chaque objet distant à surveiller, ce qui mobilise des ressources mémoire.

La présente invention a pour objet un procédé de surveillance qui n'a pas les inconvénients précités.

L'invention est basée sur le fait qu'en général, si un objet d'un processus est inaccessible, cette inaccessibilité vaut en général pour tous les objets de processus. L'inaccessibilité d'un objet indépendamment du processus auquel il appartient est un événement rare.

Selon le procédé de l'invention, on effectue ainsi la surveillance d'un unique objet par processus. Cet objet peut en fait être un gestionnaire spécialisé, centralisé dans le processus à surveiller.

Par ailleurs, pour réaliser cette surveillance, il est utile de pouvoir utiliser un protocole objet-objet, entre l'objet client demandeur d'une surveillance et l'objet serveur à surveiller, pour garder l'avantage de la transparence de la communication entre les objets distants. Or, dans un environnement ORB, il est possible de modifier les éléments représentants de type Proxy/Stub du protocole objet-objet, selon des mécanismes connus, fonction de l'ORB. Selon l'invention, on utilise cette propriété pour transmettre des demandes d'avertissement à un gestionnaire centralisé prévu dans chaque processus client.
Ainsi, le mécanisme selon l'invention peut utiliser de manière interne dans chaque processus client intéressé, un gestionnaire centralisé client, chargé de surveiller un ou plusieurs processus pour le compte d'objets de ce processus client. Selon l'invention, ce gestionnaire :
- reçoit les demandes pour être averti de l'inaccessibilité d'un objet serveur par les éléments représentants Proxy des objets clients qui émettent ces demandes ;
- assure la surveillance correspondante sur les gestionnaires centralisés serveurs concernés ; et
- le cas échéant, envoie des notifications d'inaccessibilité sur les objets clients intéressés lorsqu'il détecte l'inaccessibilité d'un gestionnaire centralisé serveur.

L'utilisation de ce gestionnaire centralisé client est transparente pour l'objet client qui demande à être averti de l'inaccessibilité d'un objet serveur : de son point de vue, il demande à un objet serveur de l'avertir de son inaccessibilité, et le cas échéant, il reçoit une notification d'inaccessibilité correspondante, sans savoir que sa demande a été gérée par le gestionnaire centralisé client de son processus client.

Selon l'invention, un procédé pour avertir un objet client de l'inaccessibilité objets serveurs utilise donc un gestionnaire centralisé client dans un processus client, pour surveiller l'activité de gestionnaires centralisés serveurs des processus dans lesquels se trouvent les objets à surveiller. Chaque gestionnaire centralisé client ou serveur est unique dans son processus. En parallèle de traitements normaux des clients, le gestionnaire centralisé client assure la surveillance des gestionnaires centralisés serveurs pour le compte d'objets clients mais de manière complètement transparente pour ceux-ci. Il assure aussi, dans le cas où un gestionnaire centralisé serveur qu'il surveille ne répond plus, l'émission de notifications d'inaccessibilité correspondantes vers les objets clients concernés.

Enfin, l'invention peut aussi bien être utilisée pour avertir un objet serveur de l'inaccessibilité d'un objet client, en inversant les rôles des gestionnaires centralisés selon l'invention.

L'invention concerne donc procédé pour avertir un premier objet d'un premier processus de l'inaccessibilité d'un ensemble d'objets d'un deuxième processus, le premier objet émettant une demande d'avertissement à chacun des objets de cet ensemble, à travers une paire d'éléments représentants associée à chacun des objets de l'ensemble, la paire comportant un premier élément représentant localisé dans le premier processus et un deuxième élément représentant localisé dans le deuxième processus. Ce procédé se caractérise en ce que pour chacune des demandes d'avertissement, il comporte les étapes de :
- déroutage de la demande d'avertissement vers un gestionnaire centralisé de surveillance du premier processus, par le premier élément représentant,
- surveillance par ledit gestionnaire centralisé de surveillance, d'un gestionnaire centralisé à surveiller de l'autre processus, pour émettre une notification d'inaccessibilité vers le premier objet, lorsque le gestionnaire centralisé de surveillance détecte un défaut de réponse dudit gestionnaire centralisé à surveiller.

Il est à noter que l'ensemble d'objets du deuxième processus peut être réduit à un singleton, c'est-à-dire que le procédé ne consiste à surveiller l'accessibilité que d'un unique objet du deuxième processus.

Dans certains cas, on peut prévoir que le gestionnaire centralisé serveur surveille lui-même un ou plusieurs objets serveurs, pour le compte des gestionnaires centralisés clients, lorsqu'il est nécessaire de détecter la disparition d'objets serveurs de façon indépendante.

Le procédé de surveillance selon l'invention est ainsi transparent pour les objets clients et serveurs, avec un délai de détection configurable. Comme la surveillance s'effectue en parallèle de traitements clients, grâce à l'utilisation de processus légers (*threads*) ou d'interruptions, le procédé de surveillance est asynchrone, libérant les objets clients de la tâche de surveillance dès qu'ils ont émis leur demande d'avertissement. Il ne nécessite la création dans chaque processus que d'un objet ORB, le gestionnaire centralisé et éventuellement d'une paire d'éléments représentants pour les couples gestionnaire centralisé client/gestionnaire centralisé serveur, quand ils n'utilisent pas de ressources partagées telles qu'une mémoire, une connexion réseau, ..., pour communiquer. Enfin, c'est un procédé qui se situe au-dessus de l'ORB, n'utilisant que des mécanismes offerts par l'ORB; il est donc entièrement portable d'une application à une autre, d'un ORB à un autre.

D'autres caractéristiques et avantages de l'invention sont décrits dans la description suivante, faite à titre indicatif et nullement limitatif et en référence aux dessins annexés dans lesquels :
- la figure 1 représente un schéma général de la mise en oeuvre d'un procédé selon l'invention, et
- la figure 2 représente un schéma d'une variante de mise en oeuvre de l'invention.

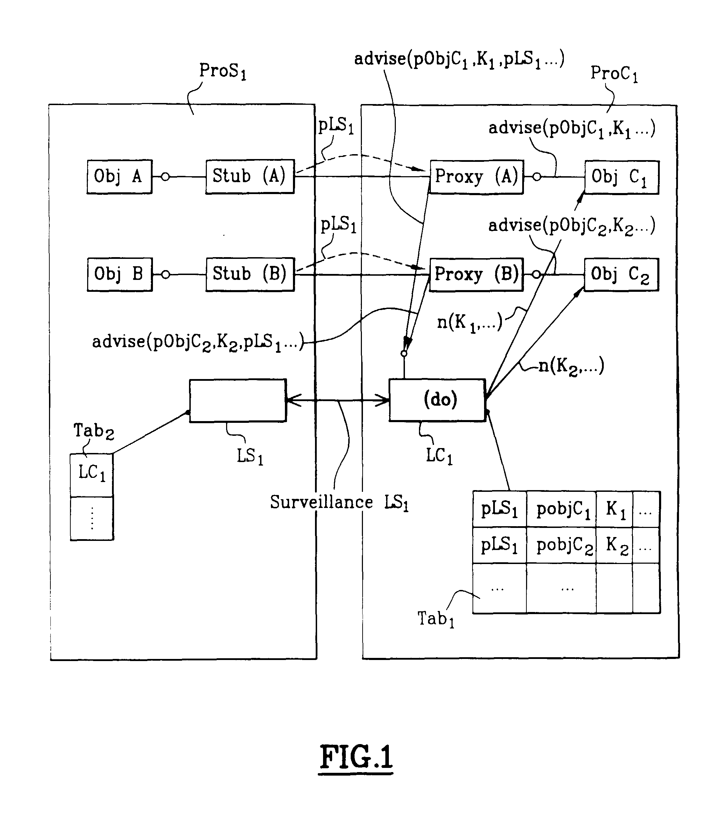

Sur la figure 1, on a représenté un processus client ProC₁ contenant des objets clients ObjC₁ et ObjC₂ et un processus serveur ProS₁ contenant des objets serveurs ObjA et ObjB.

Dans l'exemple plus particulièrement décrit et représenté, on s'intéresse à un service de cycle de vie d'objets serveurs. Mais l'invention s'applique aussi à un service de cycle de vie d'objets en général.

A chacun des différents objets clients correspondent des éléments représentants de type Proxy/Stub, créés lorsque ces objets clients se sont abonnés à des gestionnaires du processus serveur.

Un objet client qui s'enregistre auprès d'un objet serveur pour des services, peut avoir besoin de vérifier si cet objet serveur est accessible ou pas. C'est notamment le cas lorsque le service demandé consiste pour l'objet serveur à émettre des notifications vers l'objet client pour lui signaler des changements de propriétés ou des alarmes. Dans ce cas, l'objet client ne sait pas à l'avance si il va recevoir de telles notifications ni quand. En d'autres termes, s'il ne reçoit rien pendant un certain temps, il doit pouvoir être certain de l'état de l'objet serveur, à savoir s'il est accessible ou s'il est inaccessible.

Ainsi, dans l'exemple représenté sur la figure 1, l'objet client ObjC₁ s'est enregistré auprès de l'objet serveur ObjA et l'objet ObjC₂ s'est enregistré auprès de l'objet serveur ObjB, pour des services correspondants. Pour l'objet client ObjC₁, une paire d'éléments représentants Proxy/Stub a alors été créée : Proxy(A)/Stub(A). De même, pour l'objet client ObjC₂, une paire d'éléments représentants Proxy/Stub a été créée : Proxy(B)/Stub(B). Ces paires d'éléments représentants permettent aux objets concernés de communiquer selon le protocole objet-objet standard.

On suppose que chacun de ces objets clients ObjC₁, ObjC₂ est intéressé pour être averti de l'inaccessibilité de l'objet serveur associé. Chacun envoie alors une demande d'avertissement, notée dans la suite *advise,* terme anglo-saxon plus couramment employé.

Selon l'invention, le premier élément représentant de chaque paire est modifié pour que, lorsqu'il reçoit une demande de ce type (*advise*) de l'objet client associé, il la transmette à un gestionnaire centralisé de surveillance prévu dans le processus client, au lieu de la transmettre à l'élément représentant Stub correspondant. Dans la suite, on appelle ce gestionnaire centralisé de surveillance du processus client, gestionnaire centralisé client.

Ce gestionnaire centralisé client va surveiller un gestionnaire centralisé à surveiller prévu dans le processus serveur considéré. Dans la suite on appelle ce gestionnaire centralisé à surveiller du processus serveur, gestionnaire centralisé serveur.

Si le gestionnaire centralisé client détecte un défaut de réponse d'un gestionnaire centralisé serveur, il émet alors une notification d'inaccessibilité, vers chaque objet concerné de son processus client, c'est à dire vers tous les objets clients intéressés par l'inaccessibilité de l'un au moins des objets serveurs du dit processus serveur.

Pour le service de surveillance selon le procédé de l'invention, à un processus client correspond un unique gestionnaire centralisé client, et à un processus serveur correspond un unique gestionnaire centralisé serveur. Ces gestionnaires sont des objets du processus considéré (au sens ORB), et peuvent communiquer selon un protocole objet-objet ou par des ressources partagées : mémoire, connexion par sockets (selon la terminologie anglo-saxonne), permettant notamment des connexions réseau...

Le procédé selon l'invention est basé sur le fait que l'on considère que si le gestionnaire centralisé serveur devient inaccessible, lequel est un objet serveur parmi les objets serveurs du processus serveur, tous les objets de ce processus serveur sont eux-mêmes inaccessibles, et par conséquent le processus serveur lui-même.

En pratique, le message *advise* envoyé par l'objet client ne contient pas d'identification de l'objet serveur ni du gestionnaire centralisé serveur, puisque selon le principe de la transparence du protocole objet-objet, il ne connaît pas la localisation de ces objet. Ce message *advise* ne contient donc qu'une identification de l'objet client (un pointeur par exemple).

Selon l'invention, quand l'élément Proxy reçoit un message *advise*, il ajoute alors au moins le paramètre d'identification du gestionnaire de centralisation serveur correspondant, avant de dérouter ce message vers le gestionnaire centralisé client.

Ainsi selon l'invention, les éléments représentants standards Proxy/Stub du protocole objet-objet, créés lorsque les objets clients s'abonnent à des services sur des objets serveurs, sont modifiés pour permettre la surveillance des gestionnaires centralisés serveurs par des gestionnaires centralisés clients. En effet, chaque élément représentant Stub connaît ou peut connaître, les adresses des objets présents dans le processus où il se trouve. Ainsi, le paramètre d'identification du gestionnaire centralisé serveur est connu (ou peut l'être) par l'élément représentant Stub situé dans le processus concerné, ou par l'objet serveur correspondant.

Dans un exemple de mise en oeuvre pratique de l'invention, ces éléments représentants Stub des processus serveurs sont donc modifiés pour que chacun transmette cette information à l'élément représentant Proxy associé. Ainsi, comme représenté schématiquement par une flèche en pointillé sur la figure 1, l'élément Stub(A) de la paire Proxy(A)/Stub(A) passe à l'élément Proxy(A) le paramètre d'identification pLS₁ du gestionnaire centralisé LS₁ du processus serveur considéré. Ce passage d'informations peut se faire à la création de la paire d'éléments représentants ou après.

Dans cet exemple de mise en oeuvre du procédé selon l'invention, on se sert donc de la passerelle Proxy/Stub pour rapatrier au niveau des éléments Proxy les informations nécessaires pour permettre la surveillance des gestionnaires centralisés serveurs par le gestionnaire centralisé client. On notera que d'autres mécanismes peuvent être mis en oeuvre par l'homme du métier. Ainsi, un autre mécanisme peut consister à utiliser directement l'objet serveur auquel s'adresse la demande d'avertissement pour fournir ces informations aux éléments Proxy, par exemple, en utilisant des ressources partagées.

Dans la figure 1, on a représenté simplement deux processus, un processus client ProC₁ avec un gestionnaire centralisé client noté LC₁ et un processus serveur ProS₁ avec un gestionnaire centralisé serveur noté LS₁.

Ainsi, le message *advise* (*pObjC*_{*1,...*}) envoyé par l'objet ObjC₁ sur l'élément représentant Proxy(A) n'est pas transmis par celui-ci à l'élément représentant Stub(A) correspondant mais au gestionnaire centralisé client LC₁, avec un paramètre d'identification supplémentaire pLS₁ sur le gestionnaire centralisé serveur correspondant LS₁. Le message reçu par le gestionnaire centralisé client devient donc du type advise(*pObjC*_{*1,*}..._{,}pLS_{1,}...).

De même, le message advise(*pObjC*_{2,...}) envoyé par l'objet ObjC₂ sur l'élément représentant Proxy(B) n'est pas transmis par celui-ci à l'élément représentant Stub(B) correspondant mais au gestionnaire centralisé client LC₁, avec un paramètre d'identification supplémentaire pLS₁ sur le gestionnaire centralisé serveur correspondant LS₁. Le message reçu par le gestionnaire centralisé client devient donc du type advise(pObjC_{2,}...pLS_{1,}...).

Le gestionnaire centralisé client LC₁ trie les différentes demandes d'avertissement qu'il reçoit en fonction des objets clients qui les ont émises et du gestionnaire centralisé serveur identifié dans chaque message. Il mémorise les paramètres d'identification correspondant dans une structure de données adaptée Tab₁, pour d'une part initier les tâches de surveillance correspondantes et d'autre part, lorsqu'il détecte qu'un gestionnaire centralisé serveur est inaccessible, rechercher dans cette structure les objets clients à avertir. Il leur envoie alors directement une notification correspondante, en utilisant les paramètres d'identification mémorisés.

Sur la figure 1, cette structure de données contient deux messages d'avertissement, le premier correspondant à la demande de l'objet ObjC₁ sur l'objet ObjA, et le deuxième correspondant à la demande de l'objet ObjC₂ sur l'objet ObjB. Les deux messages concernent donc la surveillance sur le gestionnaire centralisé serveur LS₁ et contiennent le paramètre d'identification correspondant, pLS₁, mémorisé dans la structure de données. Cette structure de données peut contenir d'autres messages vers des objets d'autres processus serveurs. Elle peut aussi contenir plusieurs messages émanant d'un même objet client pour différents objets serveurs d'un même processus ou de différents processus serveurs.

Le gestionnaire de centralisation client trie tous ces messages par gestionnaire de centralisation serveur à surveiller. Pour un ensemble de messages concernant un même gestionnaire centralisé serveur, il n'initie qu'une seule tâche de surveillance. Le service de surveillance selon l'invention permet donc de réduire considérablement le trafic de messages de surveillance entre les deux processus.

Lorsque le gestionnaire de centralisation client détecte l'inaccessibilité d'un processus serveur, il recherche dans sa structure de données tous les messages qui contiennent le paramètre d'identification du gestionnaire de centralisation serveur correspondant. Et pour chaque message trouvé, il émet une notification d'inaccessibilité vers l'objet client correspondant.

Un même objet client peut faire diverses demandes d'avertissement. Il peut donc recevoir diverses notifications d'inaccessibilité. S'il veut pouvoir identifier les notifications, il peut utiliser un mécanisme d'attribution de clé. Par ce mécanisme, il attribue une clé à chaque message qu'il envoie. Cette clé est un paramètre du message qui identifie le message de façon unique pour l'objet client qui l'émet.

Le gestionnaire centralisé qui reçoit le message, mémorise la clé correspondante dans sa structure de données, pour l'utiliser comme paramètre de retour dans la notification d'inaccessibilité correspondante s'il doit émettre une telle notification vers l'objet client. Sur la figure 1, on a représenté l'utilisation d'une clé K₁, respectivement K₂, dans le message *advise*(pObjC₁, K₁,...), respectivement message *advise*(pObjC₂, K₂,...) et ces clés K₁ et K₂ sont mémorisées dans la structure de données Tab₁, par le gestionnaire de centralisation client LC₁.

La tâche de surveillance initiée par le gestionnaire de centralisation client peut-être de plusieurs types, selon l'interface du gestionnaire de centralisation serveur. Par exemple, elle peut consister en des allers-retours de messages (*ping* dans la littérature anglo-saxonne), le défaut de retour au bout d'une durée déterminée d0 constituant un défaut de réponse détecté par le gestionnaire centralisé client comme signifiant l'inaccessibilité du processus serveur. Cette tâche peut encore consister en la demande d'une transmission d'un message régulier, tel un battement de coeur, du gestionnaire centralisé serveur. Le défaut de réception de ce battement pendant un laps de temps déterminé d0 constitue le défaut de réponse à détecter. Dans ce cas, et comme représenté sur la figure 1, le gestionnaire centralisé client envoie une demande d'avertissement pour recevoir ce battement de coeur. Le gestionnaire centralisé serveur comprend alors une structure de données Tab₂ pour garder en mémoire les gestionnaires centralisés clients intéressés par ce battement de coeur.

Le délai de détection d0 est fixé ou configuré dans chaque gestionnaire centralisé client. Ainsi, on peut adapter ce délai en fonction des besoins et spécificités de chaque processus dans une application donnée.

Dans tous les cas, le procédé selon l'invention pour avertir un objet client de l'inaccessibilité d'objets serveurs est entièrement transparent pour cet objet, et suit un procédé de communication asynchrone : chaque fois que l'objet client fait une demande d'avertissement, et que l'élément proxy correspondant lui a indiqué qu'il a reçu cette demande, il peut effectuer d'autres tâches. Si l'inaccessibilité d'un ou des objets serveurs pour lesquels il a demandé à être averti survient, il recevra une notification correspondante.

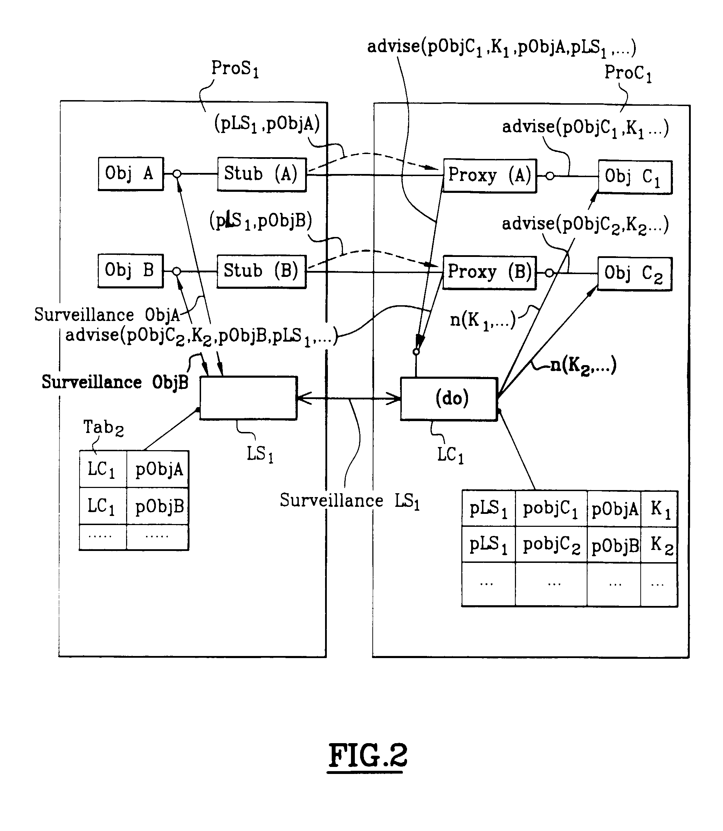

On a vu précédemment que dans certains cas, il peut-être nécessaire de surveiller un objet serveur lui-même, s'il peut être détruit indépendamment des autres, du à une erreur logicielle. On peut alors prévoir que le gestionnaire centralisé serveur effectue une tâche de surveillance sur des objets serveurs spécifiés par le gestionnaire centralisé client. Dans ce cas, l'élément représentant proxy de l'objet client est modifié pour récupérer non seulement le paramètre d'identification du gestionnaire centralisé serveur, mais aussi le paramètre d'identification de l'objet serveur concerné. Comme déjà vu précédemment, plusieurs mécanismes peuvent être utilisés pour récupérer ces deux paramètres, par exemple, en utilisant l'élément représentant Stub correspondant, modifié de manière adaptée. Ainsi, sur la figure 2, on a représenté schématiquement par une flèche le passage de ces deux paramètres à l'élément représentant Proxy de chaque paire, par l'élément représentant Stub correspondant.

L'élément représentant Proxy ajoute ces deux paramètres dans le message émis par l'objet client, puis transmet ce message au gestionnaire centralisé client.

Le gestionnaire centralisé client peut alors émettre un message vers le gestionnaire centralisé serveur correspondant à une demande de surveillance avec comme paramètre, le paramètre d'identification de l'objet serveur concerné.

Le mécanisme de surveillance du gestionnaire centralisé serveur sur l'objet serveur désigné est particulièrement simple, puisqu'ils sont dans le même processus. L'homme du métier sait mettre en oeuvre des moyens dans chaque objet serveur pour qu'il émette une notification vers le gestionnaire centralisé serveur lorsqu'il va mourir.

Dans ce dernier cas, le gestionnaire centralisé serveur envoie une notification d'inaccessibilité correspondante aux gestionnaires centralisés clients intéressés. En pratique, et comme représenté sur la figure 2, le gestionnaire centralisé serveur gère donc une structure de données Tab₃, dans laquelle il conserve pour chaque objet serveur, les identifications des gestionnaires centralisation clients intéressés par l'inaccessibilité de cet objet serveur. A chaque fois qu'il détecte l'inaccessibilité d'un objet serveur, il recherche dans cette table, les gestionnaires centralisés clients intéressés, pour leur envoyer une notification correspondante. Dans l'exemple représenté, le gestionnaire centralisé serveur assure une surveillance sur l'objet ObjA et l'objet ObjB, demandée par le gestionnaire centralisé client LC₁.

Les deux types de services, à savoir, surveillance du gestionnaire centralisé serveur et surveillance d'un objet serveur particulier, peuvent tout à fait coexister, le gestionnaire centralisé serveur assurant la réponse adéquate aux tâches de surveillance sur lui-même et en parallèle assurant la surveillance d'objets serveurs.

L'invention qui vient d'être décrite dans un exemple d'application à un service de détection du cycle de vie d'objets serveurs, s'applique aussi bien à un service de détection de cycle de vie d'objets clients. Dans ce cas, chaque processus serveur contient un gestionnaire centralisé de surveillance, pour surveiller des gestionnaires centralisés à surveiller prévus dans les processus clients.

## Revendications

1. Procédé pour avertir un premier objet (ObjC₁) d'un premier processus (ProC₁) de l'inaccessibilité d'un ensemble d'objets (ObjA) d'un deuxième processus (ProS₁), ledit premier objet émettant une demande d'avertissement (advise(pObjC₁,...)) à chacun des objets dudit ensemble, à travers une paire d'éléments représentants associée à chacun des objets dudit ensemble, ladite paire comportant un premier élément représentant (Proxy(A)) localisé dans ledit premier processus et un deuxième élément représentant (Stub(A)) localisé dans ledit deuxième processus, caractérisé en ce que pour chacune desdites demandes d'avertissement, le procédé comporte les étapes de :
• déroutage de la demande d'avertissement vers un gestionnaire centralisé de surveillance(LC₁) du premier processus, par le premier élément représentant (Proxy(A)),
• surveillance par ledit gestionnaire centralisé de surveillance (LC₁), d'un gestionnaire centralisé à surveiller (LS₁) dudit deuxième processus (ProS₁), pour émettre une notification d'inaccessibilité vers ledit premier objet (ObjC₁), lorsque le gestionnaire centralisé de surveillance détecte un défaut de réponse dudit gestionnaire centralisé à surveiller.

2. Procédé selon la revendication 1, caractérisé en ce que les premiers éléments représentants (Proxy(A)) du premier processus transmettent les demandes d'avertissement (*advise*(*pObjC*₁,...)) vers le gestionnaire centralisé de surveillance (LC₁) correspondant en ajoutant comme paramètres supplémentaires dans chacune de ces demandes, au moins un paramètre d'identification (pLS₁) du gestionnaire centralisé à surveiller concerné.

3. Procédé selon la revendication 2, caractérisé en ce que lesdits premiers éléments représentants (Proxy(A)) transmettent chacune des demandes d'avertissement (*advise*(*pObjC*_{*1*},...)) vers le gestionnaire centralisé de surveillance (LC₁) en ajoutant en outre comme paramètre supplémentaire un paramètre d'identification (pObjA) du deuxième objet de l'autre processus concerné par ladite demande.

4. Procédé selon la revendication 2 ou 3, caractérisé en ce que ces paramètres d'identification (pLS₁, pObjA) sont transmis à chaque premier élément représentant (Proxy(A)) par le deuxième élément représentant associé (Stub(A)) ou directement par le deuxième objet (ObjA) concerné.

5. Procédé selon l'une quelconque des revendications précédentes, caractérisé en ce que le gestionnaire centralisé de surveillance (LC₁) d'un processus gère une structure de données (Tab₁) pour trier les demandes d'avertissement qu'il reçoit d'objets de son processus en fonction des gestionnaires centralisés à surveiller concernés et pour gérer l'émission des notifications d'inaccessibilité correspondantes vers les objets concernés dans son processus, référencés dans ladite structure.

6. Procédé selon l'une quelconque des revendications 1 à 5 précédentes, caractérisé en ce que la surveillance d'un gestionnaire centralisé à surveiller consiste pour un gestionnaire centralisé de surveillance à lui demander de lui retourner un battement de coeur, le gestionnaire centralisé à surveiller gérant une structure de données (Tab₂) contenant l'identification des gestionnaires centralisés de surveillance intéressés par la réception du battement de coeur.

7. Procédé selon l'une quelconque des revendications 1 à 5 précédentes, caractérisé en ce que la surveillance d'un gestionnaire centralisé à surveiller utilise des allers-retours de messages.

8. Procédé selon l'une quelconque des revendications précédentes, caractérisé en ce que le délai de détection (d0) d'une non réponse d'un gestionnaire centralisé à surveiller est paramétrable, défini dans le gestionnaire centralisé de surveillance de chaque processus.

9. Procédé selon l'une quelconque des revendications précédentes, caractérisé en ce que le gestionnaire centralisé à surveiller (LS₁) d'un processus (ProS₁) surveille lui-même des objets (ObjA, ObjB) de son processus, pour retourner une notification d'inaccessibilité le cas échéant vers des gestionnaires centralisés de surveillance (LS₁) qui lui ont demandé une telle surveillance, référencés dans une structure de données correspondante (Tab₃) du gestionnaire centralisé à surveiller.

10. Procédé selon l'une quelconque des revendications 1 à 9, caractérisé en ce qu'il est utilisé dans une application basée sur un gestionnaire d'objets distribués ORB de type CORBA.

11. Procédé selon l'une quelconque des revendications 1 à 9, caractérisé en ce qu'il est utilisé dans une application basée sur un gestionnaire d'objets distribués ORB de type DCOM.

12. Programme d'ordinateur, comportant des instructions adaptées pour mettre en oeuvre un procédé selon l'une des revendications précédentes lorsque ledit programme d'ordinateur est exécuté sur un ordinateur.

13. Support de mémorisation, comportant des instructions adaptées pour mettre en oeuvre un procédé selon l'une des revendications 1 à 12 lorsque lesdites instructions sont exécutées sur un ordinateur.
